# EUROPEAN PATENT APPLICATION

(11) **EP 4 521 650 A1**
(43) Date of publication of application: **12.03.2025**
(21) Application number: 22968845.2
(22) Date of filing: 20.12.2022
(51) Int. Cl.: H04B 1/40, H04R 1/10

(54) **TOUCH-CONTROL ANTENNA MULTIPLEXING APPARATUS, AND EARPOD AND ELECTRONIC DEVICE**

(71) Applicant: Shenzhen Shokz Co., Ltd., Shenzhen, Guangdong 518108 (CN)
(72) Inventor: XIE, Jianhua, Shenzhen, Guangdong 518108 (CN); YOU, Fen, Shenzhen, Guangdong 518108 (CN); QI, Xin, Shenzhen, Guangdong 518108 (CN)
(74) Representative: Wang, Bo
(86) International application number: PCT/CN2022/140324
(87) International publication number: WO 2024/130542

(57) **Abstract**

The present disclosure discloses an antenna touch multiplexing device, a headphone, and an electronic device. The antenna touch multiplexing device includes an antenna, a touch signal transmission path, a radiofrequency (RF) signal transmission path, a touch chip, and an RF chip. The touch signal transmission path connects the antenna to the touch chip. The RF signal transmission path connects the antenna to the RF chip. The touch signal transmission path includes a first low pass filtering module and a second low pass filtering module connected in series between the antenna and the touch chip. A wiring distance between the first low pass filtering module and the antenna is less than a wiring distance between the first low pass filtering module and the second low pass filtering module. A wiring distance between the second low pass filtering module and the touch chip is less than a wiring distance between the first low pass filtering module and the second low pass filtering module. Through the above manner, the present disclosure reduces the influence of the coupling between the touch signal transmission path and the RF signal on the touch control performance and optimize the touch control performance.

## Description

### TECHNICAL FIELD

The present disclosure relates to the field of electronic devices, and in particular, to antenna touch multiplexing devices, headphones, and electronic devices.

### BACKGROUND

In some wireless communication devices such as wireless headphones, it is often necessary to have both radiofrequency (RF) communication functions and touch control functions. In related technology, an antenna is applied to transmit and receive RF signals, and the antenna can also have the function of a touch electrode to realize antenna touch multiplexing. In a current antenna touch multiplexing device, when transmitting an RF signal, the RF signal is coupled to the touch signal transmission path, resulting in deterioration of touch performance.

### SUMMARY

Embodiments of the present disclosure provide an antenna touch multiplexing device, a headphone, and an electronic device that can reduce the impact of coupling between a touch signal transmission path and a radiofrequency (RF) signal on touch performance and optimize touch performance.

One of the embodiments of the present disclosure provide an antenna touch multiplexing device. The antenna touch multiplexing device includes an antenna, a touch signal transmission path, an RF signal transmission path, a touch chip, and an RF chip. The touch signal transmission path may be connected to the antenna and configured to transmit a touch signal. The RF signal transmission path may be connected to the antenna and configured to transmit an RF signal. The touch chip may be connected to the antenna via the touch signal transmission path. The RF chip may be connected to the antenna via the RF signal transmission path. The touch signal transmission path may include a first low pass filtering module and a second low pass filtering module connected in series between the antenna and the touch chip. A wiring distance between the first low pass filtering module and the antenna may be less than a wiring distance between the first low pass filtering module and the second low pass filtering module. A wiring distance between the second low pass filtering module and the touch chip may be less than a wiring distance between the first low pass filtering module and the second low pass filtering module.

One of the embodiments of the present disclosure provide a headphone. The headphone may include an antenna touch multiplexing device, a housing, and a support assembly as described above. The antenna touch multiplexing device may be provided within the housing and close to the housing. The support assembly may be configured to support the housing and the antenna touch multiplexing device to be worn on a wearing position.

One of the embodiments of the present disclosure provide an electronic device. The electronic device may include the antenna touch multiplexing device described above.

The beneficial effect of the present disclosure is that, distinguishing from the prior art situation, the touch chip is connected to the antenna through the touch signal transmission path. The RF chip is connected to the antenna through the RF transmission path. The antenna may transmit the RF signal, and may play the role of a touch electrode. In this way, the function of the antenna and the touch control function are integrated into one, which makes the antenna touch multiplexing device compact, and thus reduces layout space conflict in electronic devices such as the headphone and other electronic devices of the present disclosure. In the embodiment of the antenna touch multiplexing device of the present disclosure, the touch signal transmission path includes a first low pass filtering module and a second low pass filtering module connected in series. The wiring distance between the first low pass filtering module and the antenna is less than the wiring distance between the first low pass filtering module and the second low pass filtering module. The wiring distance between the second low pass filtering module and the touch chip is less than the wiring distance between the first low pass filtering module and the second low pass filtering module. In other words, the first low pass filtering module is disposed proximate to the antenna, and the second low pass filtering module is disposed proximate to the touch chip. In this way, the first low pass filtering module may block the RF signal in the antenna touch multiplexing device and reduce its interference with the touch chip. The second low pass filtering module may further block the RF signal, further reducing the interference of the RF signal on the touch signal. As the first low pass filtering module is set close to the antenna, the second low pass filtering module is set close to the touch chip. The RF signal radiated from the antenna is less likely to be coupled with the wire between the first low pass filtering module and the antenna and the wire between the second low pass filtering module and the touch chip, ensuring the reliability of the touch control performance. Moreover, signals generated by the coupling of the wire between the first low pass filtering module and the second low pass filtering module with the RF signals are blocked by the first low pass filtering module and the second low pass filtering module from two ends of the wire, respectively. The coupling of the wire between the first low pass filtering module and the second low pass filtering module with the RF signal may not affect the touch chip and the RF chip. Thus, the relative position of the antenna and the touch chip may be flexibly arranged to optimize the spatial layout of the antenna touch multiplexing device.

### BRIEF DESCRIPTION OF THE DRAWINGS

The accompanying drawings herein, which are incorporated into and form a part of the present disclosure, illustrate embodiments consistent with the present disclosure and are used in conjunction with the present disclosure to explain the principles of the present disclosure. Furthermore, these accompanying drawings and textual descriptions are not intended to limit the scope of the present disclosure in any way, but rather to illustrate the concepts of the present disclosure for those skilled in the art by reference to particular embodiments, and wherein:
FIG. 1 is a schematic diagram illustrating an electronic device according to some embodiments of the present disclosure;
FIG. 2 is a schematic diagram illustrating a headphone according to some embodiments of the present disclosure;
FIG.3 is a schematic diagram illustrating the headphone shown in FIG.2 when it is worn;
FIG. 4 is a schematic diagram illustrating an antenna touch multiplexing device according to some embodiments of the present disclosure;
FIG. 5 is a schematic diagram illustrating the antenna touch multiplexing device shown in FIG. 4;
FIG. 6 is a schematic diagram illustrating an antenna touch multiplexing device according to some embodiments of the present disclosure; and
FIG.7 is a schematic diagram illustrating the antenna touch multiplexing device shown in FIG.6.

### DETAILED DESCRIPTION

To more clearly illustrate the technical solutions and advantages of the present disclosure, the technical solutions in the embodiments of the present disclosure will be clearly and completely described below in connection with the embodiments of the present disclosure. Obviously, the described embodiments are a part of the embodiments of the present disclosure, and not all of the embodiments. Based on the embodiments in the present disclosure, all other embodiments obtained by those having ordinary skills in the art without making creative efforts fall within the scope of protection of the present disclosure. The following embodiments and features in the embodiments may be combined with each other without conflict.

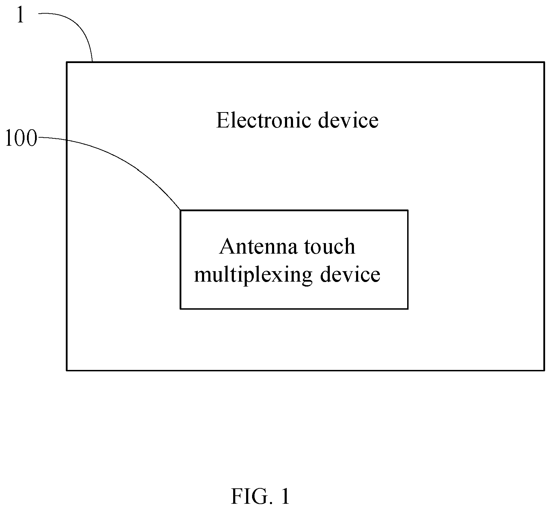

Referring to FIG. 1, embodiments of the present disclosure provide an electronic device 1. The electronic device 1 includes an antenna touch multiplexing device 100. The electronic device 1 may be a wireless headphone, a smart bracelet, a smartwatch, a smart speaker, or the like, that requires both touch function and radiofrequency function.

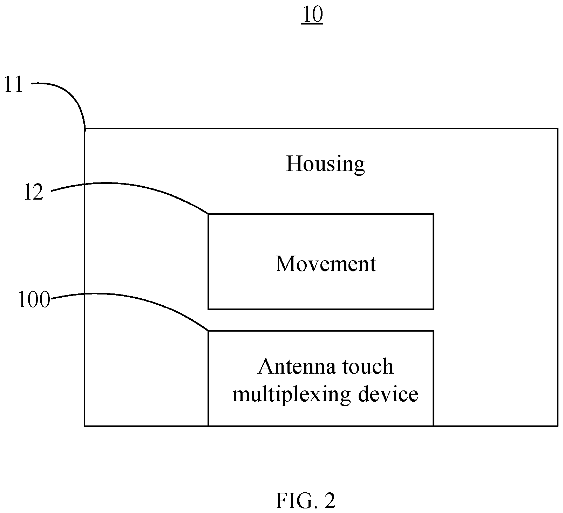

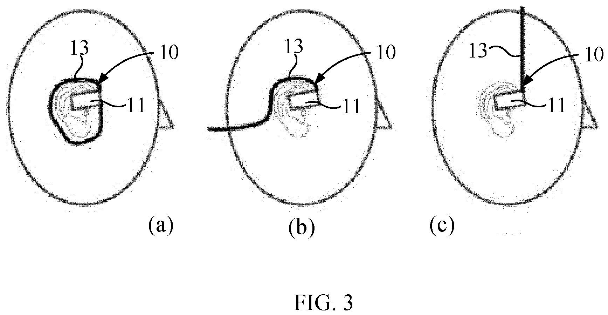

Referring to FIG. 2 and FIG. 3, embodiments of the present disclosure provide a headphone 10. The headphone 10 may include an antenna touch multiplexing device 100, a housing 11, a movement 12, and a support assembly 13. The support assembly 13 is configured to support the housing 11 and the antenna touch multiplexing device 100 to be worn at a wearing position. The aforementioned wearing position may be a specific position on the user's head, such as the mastoid process, temporal bone, parietal bone, frontal bone, etc., of the head, the front side of the ear back away from the head, or a position on the left or right side of the head that is located in front of the user's ear on the sagittal axis of the human body. Components such as the movement 12 may be provided inside the housing 11, and the movement 12 may convert an electrical signal into a mechanical vibration. The mechanical vibration may be transmitted primarily through a medium such as the user's skull (i.e., bone conduction) to create a bone conduction sound, or primarily through a medium such as air (i.e., air conduction) to create an air conduction sound. The support assembly 13 may be provided in a ring shape and disposed around the user's ear, as shown in (a) in FIG. 3. The support assembly 13 may also be provided as an ear hook and a rear-hanging structure cooperating to be disposed around the back side of the head, as shown in (b) in FIG. 3. Alternatively, the support assembly 13 may be provided as a headband structure and disposed around the top of the user's head, as shown in (c) in FIG. 3. The antenna touch multiplexing device 100 may enable the headphone 10 to have the capability of radiofrequency communication, thereby enabling the headphone 10 to communicate with a smart terminal device such as a cell phone or a tablet. The antenna touch multiplexing device 100 may also enable the headphone 10 to have a touch function, thereby enabling a user to control the headphone 10 through the touch function. Alternatively, signals generated by the user's touching of the headphone 10 may be transmitted to the aforementioned smart terminal device via the antenna touch multiplexing device 100. The antenna touch multiplexing device 100 is disposed within and close to the housing 11. The antenna touch multiplexing device 100 integrates the function of the antenna 110 and the touch function and is provided on the housing 11 of the headphone 10. The multiplexing of the antenna 110 with touch-sensitive electrodes may enable the headphone 10 to be compact and reduce spatial conflicts in the layout of electronic components.

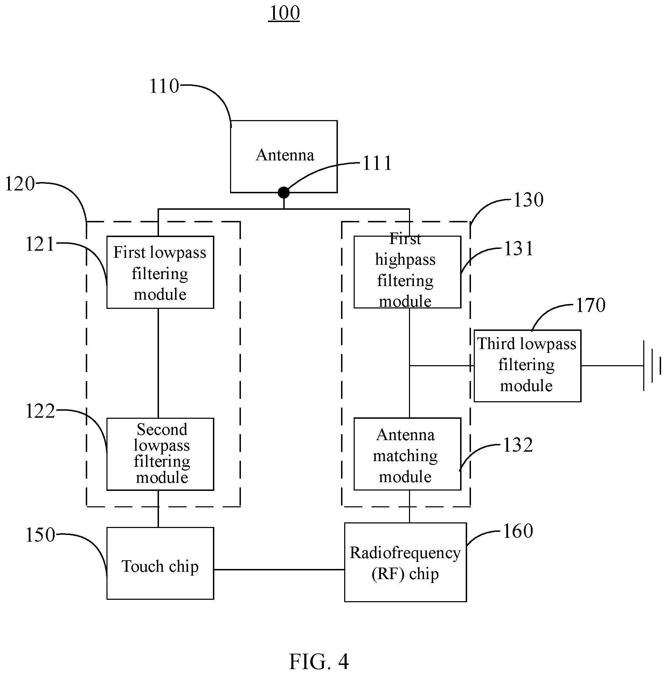

Referring to FIG. 4, embodiments of the present disclosure provide an antenna touch multiplexing device 100. The antenna touch multiplexing device 100 includes an antenna 110, a touch signal transmission path 120, a radiofrequency (RF) signal transmission path 130, a touch chip 150, and an RF chip 160. The antenna 110 is connected to the touch chip 150 via the touch signal transmission path 120, and a touch signal received by the antenna 110 may be transmitted to the touch chip 150 via the touch signal transmission path 120. The antenna 110 is connected to the RF chip 160 via the RF signal transmission path 130, and an RF signal transmitted and received by the antenna 110 may be transmitted to the RF chip 160 via the RF signal transmission path 130. The touch chip 150 is communicatively connected with the RF chip 160. The touch chip 150 may transmit specific state information of a touch trigger to the RF chip 160. A signal received by the RF chip 160 for controlling one or more parameters of the touch chip 150 may be transferred to the touch chip 150.

The antenna 110 may be a two-dimensional antenna, and the two-dimensional antenna is composed of a sheet metal having a certain area, which may be at least referred to the related technology, and will not be repeated herein. The antenna 110 may be configured to conduct the RF signal. The antenna 110 may radiate one or more guided waves in the antenna touch multiplexing device 100 into space and transform the guided waves into free space electromagnetic waves. The antenna 110 may also receive one or more free space electromagnetic waves in space to be transformed into guided waves flowing in the antenna touch multiplexing device 100. The antenna 110 enables the antenna touch multiplexing device 100 to communicate with the outside world based on the conduction of the RF signal. The antenna 110 may form a coupling capacitance on the surface when the antenna 110 is in contact with a user's finger or other device with an electric field. The change in the capacitance value of the coupling capacitance may generate a touch signal. In summary, the antenna 110 has both the ability to transform the RF signal and the ability to sense touches, and the antenna 110 also serves as a touch-sensing electrode. In this way, the function of the antenna 110 and the touch control function may be integrated into one single device, to make the antenna touch multiplexing device 100 compact and to reduce spatial conflicts in the layout of electronic components. In one embodiment, the antenna 110 has an antenna feed point 111, and the touch signal transmission path 120 and the RF signal transmission path 130 are both electrically connected with the antenna feed point 111 to exchange signals with the antenna 110 through the antenna feed point 111.

The touch signal transmission path 120 is connected with the antenna 110 and is configured to transmit the touch signal. The touch signal transmission path 120 includes a first low pass filtering module 121 and a second low pass filtering module 122 connected in series between the antenna 110 and the touch chip 150. A low-frequency signal may pass through the first low pass filtering module 121 and the second low pass filtering module 122 normally, while a high-frequency signal exceeding a set threshold is blocked and attenuated. The first low pass filtering module 121 and the second low pass filtering module 122 may prevent the RF signal in the RF signal transmission path 130 from transmitting to the touch chip 150, so as to minimize the impact of the RF signal on the touch performance.

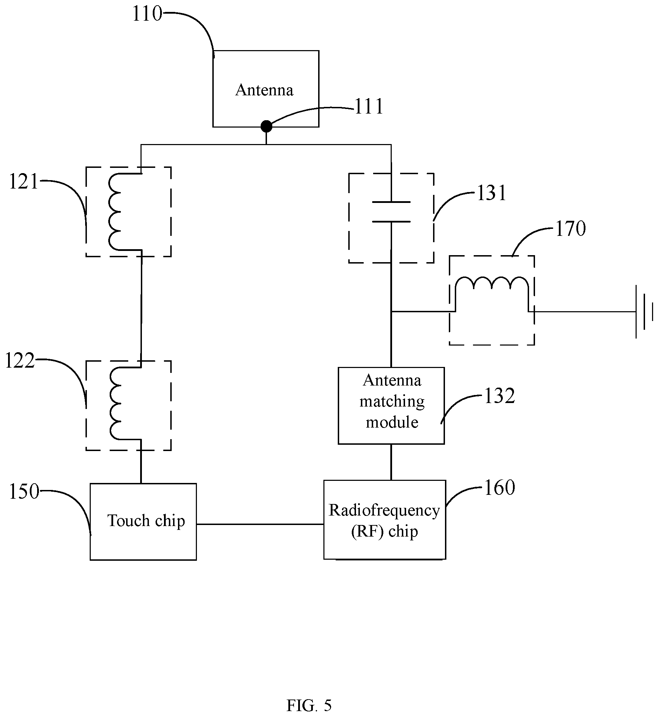

Specifically, referring to FIG. 5, the first low pass filtering module 121 is an inductive circuit. The first low pass filtering module 121 may be a circuit including an inductor or a magnetic bead, or a circuit including an inductor and a capacitor, etc., and the final circuit is rendered inductive. The inductive circuit allows the low-frequency signal to pass through normally and prevents the high-frequency signal from passing through. Optionally, the inductance value of the first low pass filtering module 121 is greater than or equal to 22nH. For example, an inductive element or a magnetic bead element having an inductance value of 22nH is selected as the first low pass filtering module 121. The natural frequency of the inductive circuit with the inductance value of 22nH forms a stopband around 2.4GHz or 1.4GHz, equivalent to an open circuit. Concurrently, while the inductive circuit with the inductance value of 22nH is open at high frequencies, and acts as a short circuit to a touch signal below 500kHz, thus achieving low pass high-impedance filtering. The touch signal in the touch multiplexing circuit of the antenna 110 has a suitable frequency range of below 500 kHz and the RF signal in the touch multiplexing circuit of the antenna 100 has a suitable frequency range of above 2.4 GHz. The first low pass filtering module 121 with the inductance value that is greater than or equal to 22nH may well meet the needs of the antenna touch multiplexing device 100.

The second low pass filtering module 122 is an inductive circuit. The second low pass filtering module 122 may be a circuit composed of an inductor or a magnetic bead, or a circuit including an inductor and a capacitor, etc., and the final circuit is rendered inductive. The inductive circuit allows the low-frequency signal to pass through normally and prevents the high-frequency signal from passing through. Optionally, the inductance value of the second low pass filtering module 122 is greater than or equal to 22nH. For example, an inductive element or a magnetic bead element having an inductance value of 22nH is selected as the second low pass filtering module 122. The natural frequency of the inductive circuit with the inductance value of 22nH forms a stopband around 2.4GHz or 1.4GHz, equivalent to an open circuit. Concurrently, while the inductive circuit with the inductance value of 22nH is open at high frequencies, and acts as a short circuit to a touch signal below 500kHz, thus achieving low pass high-impedance filtering. The touch signal in the touch multiplexing circuit of the antenna 110 has a suitable frequency range of below 500 kHz and the RF signal in the touch multiplexing circuit of the antenna 100 has a suitable frequency range of above 2.4 GHz. The second low pass filtering module 122 with the inductance value that is greater than or equal to 22nH may well meet the needs of the antenna touch multiplexing device 100 to cut off the RF signal to pass the touch signal.

Because the RF signal may be coupled with the touch signal transmission path 120, an interfering signal may be generated and the touch performance may be deteriorated. In order to improve this technical problem, the antenna touch multiplexing device 100 of the present disclosure has a wiring distance between the first low pass filtering module 121 and the antenna 110 to be smaller than a wiring distance between the first low pass filtering module 121 and the second low pass filtering module 122. A wiring distance between the second low pass filtering module 122 and the touch chip 150 is less than the wiring distance between the first low pass filtering module 121 and the second low pass filtering module 122. In other words, the first low pass filtering module 121 is provided close to the antenna 110, and the second low pass filtering module 122 is provided close to the touch chip 150. In this way, the first low pass filtering module 121 may block the RF signal (guided waves) in the antenna touch multiplexing device 100, reducing its interference on the touch chip 150. The second low pass filtering module 122 may further block the RF signal (guided waves), further reducing the interference of the RF signal on the touch signal. As the first low pass filtering module 121 is set close to the antenna 110 and the second low pass filtering module 122 is set close to the touch chip 150, the RF signal (free-space electromagnetic waves) radiated by the antenna 110 is less likely to couple with the wire between the first low pass filtering module 121 and the antenna 110 and the wire between the second low pass filtering module 122 and the touch chip 150, which ensures reliable touch control performance. Further, the signal generated by the coupling of the wire between the first low pass filtering module 121 and the second low pass filtering module 122 and the RF signal radiated from the antenna 110 (free space electromagnetic waves) may be blocked by the first low pass filtering module 121 and the second low pass filtering module 122 at the two ends of the wire, and the coupling of the wire between the first low pass filtering module 121 and the second low pass filtering module 122 and the RF signal may not affect the touch chip 150 and the RF chip 160, so that relative position of the antenna 110 and the touch chip 150 may be flexibly arranged, to optimize the spatial layout of the antenna touch multiplexing device 100.

Optionally, the wiring distance between the first low pass filtering module 121 and the antenna 110 is within a range of 0.2-90 mm. For example, the wiring distance between the first low pass filtering module 121 and the antenna 110 is within a range of 0.3-70 mm, or a range of 3-50 mm, or a range of 5-30 mm, or a range of 0.2-0.3 mm. If the wiring distance between the first low pass filtering module 121 and the antenna 110 is too long, it may increase the possibility of the RF signal coupling with the wire, which deteriorates the touch control performance. If the wiring distance between the first low pass filtering module 121 and the antenna 110 is too short, it may result in an overly high distribution density of components, which reduces the flexibility of the layout.

Optionally, the wiring distance between the second low pass filtering module 122 and the touch chip 150 is within a range of 0.2-90 mm. For example, the wiring distance between the second low pass filtering module 122 and the touch chip 150 is within a range of 0.3-70 mm, or a range of 3-50 mm, or a range of 5-30 mm, or a range of 0.2-0.3 mm. If the wiring distance between the second low pass filtering module 122 and the touch chip 150 is too long, it may increase the possibility of the RF signal coupling with the wire, which deteriorates the touch performance. If the wiring distance between the second low pass filtering module 122 and the touch chip 150 is too short, it may result in an overly high distribution density of the components, which reduces the flexibility of the layout.

Referring to FIG. 4, the RF signal transmission path 130 is coupled to the antenna 110 and is configured to transmit the RF signal. The RF signal transmission path 130 includes a first high pass filtering module 131 connected in series between the antenna 110 and the RF chip 160. The first high pass filtering module 131 allows a signal above a certain frequency to pass through, while blocking signals of a lower frequency from passing through. The first high pass filtering module 131 prevents the touch signal of the antenna 110 from passing through, thereby reducing the impact of the touch signal on the RF performance and improving the reliability of the touch performance.

Referring to FIG. 5, specifically, the first high pass filtering module 131 is a capacitive circuit. The first high pass filtering module 131 may be a circuit including one or more capacitors and other electronic components, and the circuit is ultimately capacitive. The capacitive circuit allows a high-frequency signal to pass through and prevents a low-frequency signal from passing through. Optimally, the capacitance value of the first high pass filtering module 131 is less than or equal to 1 µF. For example, a capacitor with a capacitance value of 1 µF is selected as the first high pass filtering module 131. The capacitor with a capacitance value of 1 µF is equivalent to an open circuit for a signal below 500kHz and a short circuit for a signal around 2.4GHz, thus realizing high pass and low-resistance filtering. A suitable frequency range for the touch multiplexing circuit of the antenna 110 is below 500 kHz, and a suitable frequency range of the RF signal is above 2.4 GHz. The first high pass filtering module 131 of less than or equal to 1 µF may satisfy the need for the RF signal transmission path 130 in the antenna touch multiplexing device 100 to cut off the touch signal and pass through the RF signal.

The antenna 110 naturally has a certain amount of parasitic capacitance when used as a touch electrode. The presence of parasitic capacitance weakens the sensing ability of the touch chip 150. While a compensation circuit may be designed within the touch chip 150 to compensate for the effect of the parasitic capacitance, the components in the RF signal transmission path 130 and the RF chip 160 may increase the parasitic capacitance and may exceed the touch chip 150's ability to compensate. In order to ameliorate this technical problem, referring to FIG. 4 and FIG. 5, the antenna touch multiplexing device 100 in the embodiment of the present disclosure also includes a third low pass filtering module 170. An end of the third low pass filtering module 170 is connected to a node between the first high pass filtering module 131 and the RF chip 160, and the other end of the third low pass filtering module 170 is grounded. For example, as shown in FIG. 5, the first high pass filtering module 131 includes a capacitor, the third low pass filtering module 170 includes an inductor, and the inductor is provided on a side of the capacitor away from the antenna 110 and grounded.

The third low pass filtering module 170 is an inductive circuit. The third low pass filtering module 170 may be a circuit including an inductor or a magnetic bead, or a circuit including an inductor with a capacitor, etc., and the final circuit is rendered inductive. The inductive circuit allows the low-frequency signal to pass through normally and prevents the high-frequency signal from passing through. Similar to the first low pass filtering module 121 and the second low pass filtering module 122, the inductance value of the third low pass filtering module 170 is greater than or equal to 22 nH. In this way, when the antenna touch multiplexing device 100 conducts the low-frequency signal, the RF chip 160 may experience a ground short circuit relative to the touch signal transmission path 120 so that the parasitic capacitance of the components such as the RF chip 160 do not affect the touch chip 150, which optimizes touch performance. Therefore, the design of the RF chip 160 may also be unconstrained by the touch performance and may facilitate the design of the RF signal transmission path 130 and the RF chip 160. The arrangement of the third low pass filtering module 170 has less impact on the RF signal transmission due to the low pass and high-resistance characteristics of the third low pass filtering module 170 during RF signal transmission.

In one embodiment, the antenna 110 is an electrically small antenna due to the limitation of the usage space. As the electrically small antenna 110 has a high capacitive impedance and a small resistance, the RF signal cannot be matched with the electrically small antenna 110, which may cause a decrease in the reliability of the RF signal transmission. In order to improve the technical problem, the antenna touch multiplexing device 100 further includes an antenna matching module 132. The antenna matching module 132 is disposed between the first high pass filtering module 131 and the RF chip 160, an end of the antenna matching module 132 is connected to the first high pass filtering module 131 and an another end of the antenna matching module is connected to the RF chip 160. The antenna matching module 132 may tune the RF signal to the electrically small antenna 110. The antenna matching module 132 may use an L-type matching circuit, a T-type matching circuit, or a PI-type matching circuit, which are not specifically limited herein.

Further, one end of the third low pass filtering module 170 is connected to a node between the first high pass filtering module 131 and the antenna matching module 132. In this way, when the antenna touch multiplexing device 100 conducts the low-frequency signal, the RF chip 160 and the antenna matching module 132 experience a ground short circuit relative to the touch signal transmission circuit, so that the RF chip 160 and the parasitic capacitance of the antenna matching module 132 do not affect the touch chip 150 to optimize the touch control performance. In this way, the design of the RF chip 160 and the antenna 110 matching circuit may also be unrestricted by the touch control performance, which facilitates the design of the antenna matching module 132 and the RF chip 160 in the RF signal transmission path 130. The arrangement of the third low pass filtering module 170 has less impact on the RF signal transmission due to the low pass and high-resistance characteristics of the third low pass filtering module 170 during RF signal transmission.

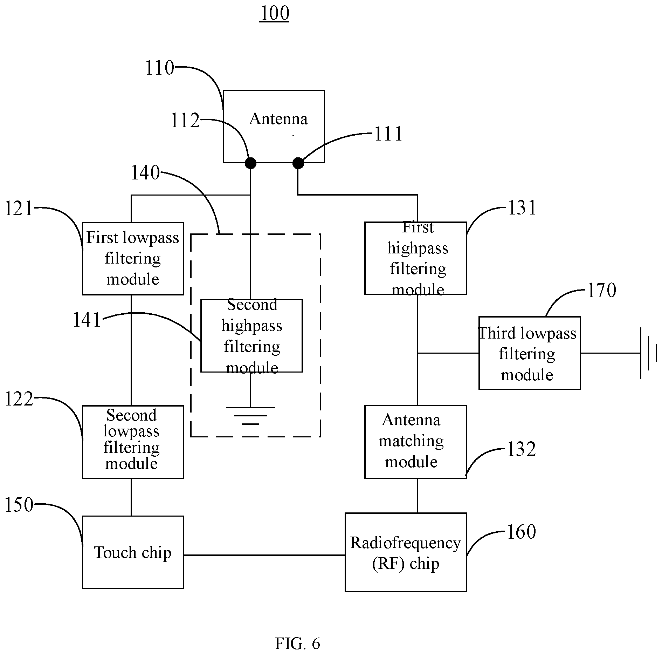

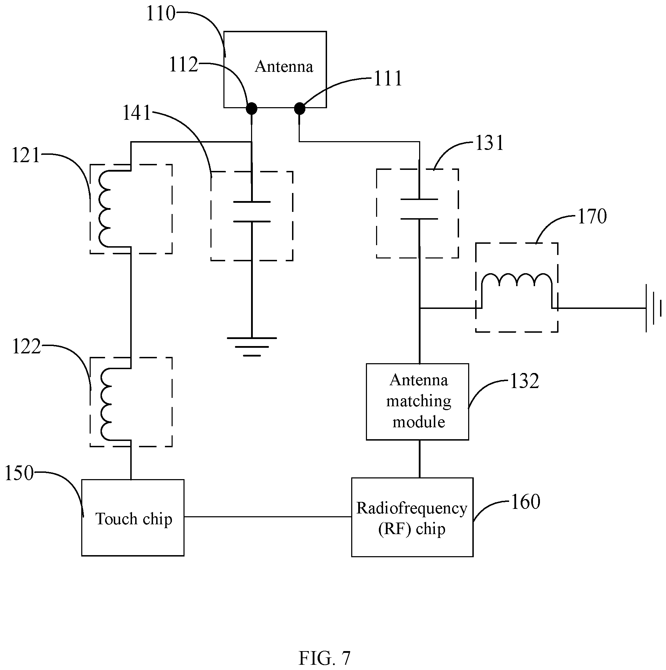

In one embodiment, referring to FIG. 6 and FIG. 7, the antenna 110 has an antenna feed point 111 and an antenna location 112, and the RF signal transmission path 130 is electrically connected to the antenna feed point 111. The touch signal transmission path 120 is electrically connected to the antenna location 112. The antenna feed point 111 and the antenna location 112 are spaced apart by a certain distance, so that the distance between the RF signal transmission path 130 and the touch signal transmission path 120, and the distance between the RF chip 160 and the touch chip 150 may all be set larger, thereby reducing the requirement for circuit board integration and lowering the design cost.

Further, the antenna touch multiplexing device 100 further includes a grounding path 140. The grounding path 140 includes a second high pass filtering module 141. One end of the second high pass filtering module 141 is electrically connected to the antenna location 112. The other end of the second high pass filtering module 141 is grounded. When transmitting the RF signal, the grounding path 140 is equivalent to a distributed parameter inductor, which may have the effect of tuning the distributed parameter capacitance of the electrically small antenna 110.

Specifically, the second high pass filtering module 141 further forms an inductor-capacitor (LC)resonant circuit within the grounding path 140. For example, the second high pass filtering module 141 includes a capacitor and an inductor. Alternatively, the second high pass filtering module 141 is provided to form an LC resonant circuit in conjunction with a wire within the grounding path 140.

Specifically, the wire within the grounding path 140 may be equivalent to a distributed parameter inductor, and then the wire is equivalent to the capacitive second high pass filtering module 141 as an LC resonant circuit. In this manner, the second high pass filtering module 141 is set to form an LC resonant circuit in conjunction with the wire within the grounding path 140.

On the basis of the above embodiment, a resonant frequency of the LC resonant circuit is less than an operating frequency of the RF signal. The LC resonant circuit in this way is inductive. The grounding path 140 is inductive, then the antenna 110 may include an antenna with grounding such as an inverted-f antenna (IFA), a planar inverted-f antenna (PIFA), or LOOP. The antenna 110 as described above has a wider bandwidth compared to antenna 110 with only antenna feed point 111 under the same headroom condition.

The second high pass filtering module 141 is a capacitive circuit and has a capacitance value of greater than or equal to 22 pF. The second high pass filtering module 141 is a capacitive circuit and has a capacitance value of less than or equal to 1 µF. The second high pass filtering module 141 with a capacitance value in the above range is equivalent to an open circuit for signals below 500 kHz, so that the grounding path 140 does not affect the transfer of the touch signal. The second high pass filtering module 141with a capacitance value in the above range is equivalent to a short circuit for signals below 2.4 GHz. In this way the second high pass filtering module 141 may achieve high pass and low-impedance filtering to enable the antenna touch multiplexing device 100 to operate on the RF signal when the grounding path 140 may have the technical effect described above.

In summary, the touch chip 150 is connected to the antenna 110 via the touch signal transmission path 120. The RF chip 160 is connected to the antenna 110 via the RF transmission path. The antenna 110 may transmit the RF signal, and may also play the role of a touch electrode. In this way, the function of the antenna 110 and the touch control function are integrated into one, which makes the antenna touch multiplexing device 100 compact, and thus reduces the technical problem of conflicting layout spaces in electronic devices 1 such as the headphone 10 and other electronic devices 1 of the present disclosure may be reduced. In the embodiment of the antenna touch multiplexing device 100 of the present disclosure, the touch signal transmission path 120 includes a first low pass filtering module 121 and a second low pass filtering module connected in series. The wiring distance between the first low pass filtering module 121 and the antenna 110 is less than the wiring distance between the first low pass filtering module 121 and the second low pass filtering module 122. The wiring distance between the second low pass filtering module 122 and the touch chip 150 is less than the wiring distance between the first low pass filtering module 121 and the second low pass filtering module 122. In other words, the first low pass filtering module 121 is disposed proximate to the antenna 110, and the second low pass filtering module 122 is disposed proximate to the touch chip 150. In this way, the first low pass filtering module 121 may block the RF signal in the antenna touch multiplexing device 100 and reduce its interference with the touch chip 150. The second low pass filtering module 122 may further block the RF signal, further reducing the interference of the RF signal on the touch signal. As the first low pass filtering module 121 is set close to the antenna 110, the second low pass filtering module 122 is set close to the touch chip 150. The RF signal radiated from and received by the antenna 110 is less likely to be coupled with the wire between the first low pass filtering module 121 and the antenna 110 and the wire between the second low pass filtering module 122 and the touch chip 150 to generate an interference signal, ensuring the reliability of the touch control performance. Moreover, signals generated by the coupling of the wire between the first low pass filtering module 121 and the second low pass filtering module 122 with the RF signals are blocked by the first low pass filtering module 121 and the second low pass filtering module 122 from two ends of the wire, respectively. The coupling of the wire between the first low pass filtering module 121 and the second low pass filtering module 122 with the RF signal may not affect the touch chip 150 and the RF chip 160. Thus, the relative position of the antenna 110 and the touch chip 150 may be flexibly arranged to optimize the spatial layout of the antenna touch multiplexing device 100.

Furthermore, in the present disclosure, unless otherwise expressly provided and limited, the terms "connected", "connection (electrically connection)", "stacked", or the like are to be broadly construed. For example, as a fixed connection, a detachable connection, or a one-piece connection; a direct connection or an indirect connection through an intermediate medium or an interaction between two elements. To a person of ordinary skill in the art, the specific meaning of the above terms in the present disclosure may be understood on a case-by-case basis.

Finally, it should be noted that the above embodiments are only used to illustrate the technical solutions of the present disclosure, and are not intended to be a limitation thereof. Notwithstanding that the present disclosure has been described in detail with reference to the foregoing embodiments, it should be understood by a person of ordinary skill in the art may modify or replace some or all of the technical solutions recorded in the foregoing embodiments with equivalent technical features. Such modification or replacement does not take the essence of the corresponding technical solutions out of the scope of the technical solutions of the various embodiments of the present disclosure.

## Claims

1. An antenna touch multiplexing device, comprising:
an antenna;
a touch signal transmission path, connected to the antenna and configured to transmit a touch signal;
a radiofrequency (RF) signal transmission path, connected to the antenna and configured to transmit an RF signal;
a touch chip connected to the antenna via the touch signal transmission path; and
an RF chip connected to the antenna via the RF signal transmission path, wherein
the touch signal transmission path includes a first low pass filtering module and a second low pass filtering module connected in series between the antenna and the touch chip, wherein
a wiring distance between the first low pass filtering module and the antenna is less than a wiring distance between the first low pass filtering module and the second low pass filtering module; and
a wiring distance between the second low pass filtering module and the touch chip is less than a wiring distance between the first low pass filtering module and the second low pass filtering module.

2. The antenna touch multiplexing device of claim 1, wherein
the wiring distance between the first low pass filtering module and the antenna is within a range of 0.2-90 mm.

3. The antenna touch multiplexing device of claim 1, wherein
the wiring distance between the second low pass filtering module and the touch chip is within a range of 0.2-90 mm.

4. The antenna touch multiplexing device of claim 1, wherein:
the RF signal transmission path includes a first high pass filtering module connected in series between the antenna and the RF chip.

5. The antenna touch multiplexing device of claim 4, wherein
the first high pass filtering module is a capacitive circuit and has a capacitance value less than or equal to 1 µF.

6. The antenna touch multiplexing device of claim 4, further comprising a third low pass filtering module, wherein
one end of the third low pass filtering module is connected to a node between the first high pass filtering module and the RF chip, and the other end of the third low pass filtering module is grounded.

7. The antenna touch multiplexing device of claim 6, wherein
the first high pass filtering module includes a capacitor, and the third low pass filtering module includes an inductor, and the inductor is disposed on a side of the capacitor away from the antenna.

8. The antenna touch multiplexing device of claim 6, further comprising an antenna matching module, wherein
the antenna matching module is provided between the first high pass filtering module and the RF chip, an end of the antenna matching module is connected to the first high pass filtering module and an another end of the antenna matching module is connected to the RF chip, and an end of the third low pass filtering module is connected to a node between the first high pass filtering module and the antenna matching module.

9. The antenna touch multiplexing device of claim 1, wherein
the antenna is an electrically small antenna.

10. The antenna touch multiplexing device of claim 1, wherein
the first low pass filtering module is an inductive circuit with an inductance value greater than or equal to 22nH, and/or the second low pass filtering module is an inductive circuit with an inductance value greater than or equal to 22nH.

11. The antenna touch multiplexing device of claim 1, wherein
the antenna has an antenna feed point, and the touch signal transmission path and the RF signal transmission path are electrically connected with the antenna feed point.

12. The antenna touch multiplexing device of claim 1, wherein
the antenna has an antenna feed point and an antenna location, the RF signal transmission path is electrically connected with the antenna feed point, and the touch signal transmission path is electrically connected with the antenna location; and
the antenna touch multiplexing device further comprises a grounding path, the grounding path includes a second high pass filtering module, an end of the second high pass filtering module is electrically connected with the antenna location, and an another end of the second high pass filtering module is grounded.

13. The antenna touch multiplexing device of claim 12, wherein:
the second high pass filtering module further forms an inductor-capacitor (LC) resonant circuit within the grounding path, and a resonant frequency of the LC resonant circuit is less than an operating frequency of the RF signal.

14. The antenna touch multiplexing device of claim 12, wherein
the second high pass filtering module is a capacitive circuit with a capacitance value less than or equal to 1 µF.

15. The antenna touch multiplexing device of claim 14, wherein
the second high pass filtering module is provided to cooperate with wiring within the grounding path to form the LC resonant circuit.

16. The antenna touch multiplexing device of claim 14, wherein
the capacitance value of the second high pass filtering module is greater than or equal to 22pF.

17. The antenna touch multiplexing device of claim 1, wherein
the touch chip is communicatively connected with the RF chip.

18. A headphone, comprising:
an antenna touch multiplexing device of any one of claims 1-17;
a housing, wherein the antenna touch multiplexing device is disposed within the housing and is close to the housing; and
a support assembly configured to support the housing and the antenna touch multiplexing device to be worn on a wearing position.

19. An electronic device, comprising:
an antenna touch multiplexing device of any one of claims 1-17.
